# EUROPÄISCHE PATENTSCHRIFT

(11) **EP 2 878 871 B1**
(45) Veröffentlichungstag und Bekanntmachung des Hinweises auf die Patenterteilung: **22.03.2017**
(21) Anmeldenummer: 14194624.4
(22) Anmeldetag: 25.11.2014
(51) Int. Cl.: F16L 33/02, F16L 33/025, F16L 33/207, F16L 33/30, F02M 35/10

(54) **Ladeluftverbindungsanordnung für ein Kraftfahrzeug**
Assembly for a charged air connection for a motor vehicle
Assemblage de raccord d'air chargé pour un véhicule automobile

(30) Priorität: 02.12.2013 DE 102013113293
(43) Veröffentlichungstag der Anmeldung: 03.06.2015
(73) Patentinhaber: VERITAS AG, 63571 Gelnhausen (DE)
(72) Erfinder: Hattaß, Dirk, 63584 Gründau (DE); Keller, Uwe, 63571 Gelnhausen (DE); Gerigk, Manuel, 63571 Gelnhausen (DE)
(74) Vertreter: Patentship Patentanwaltsgesellschaft mbH

(56) Entgegenhaltungen:
- EP-A1- 0 312 756
- EP-A1- 0 499 819
- DE-A1- 2 945 560
- DE-A1-102008 049 095
- US-A- 1 303 098
- US-A- 1 786 489
- US-A- 3 275 349
- US-A- 3 891 250
- US-A1- 2010 109 319

## Beschreibung

Die vorliegende Erfindung betrifft eine Ladeluftverbindungsanordnung für ein Kraftfahrzeug, mit einem Ethylen-Acrylat-Kautschuk-Schlauch, einer Schelle und einem Anschlussstutzen.

Bei bekannten Anschlussstutzen können aufgesteckte Schläuche Abrutschen, so dass sich eine Anbindung des Schlauches löst.

Die Druckschrift US 3,891,250 A betrifft eine Schlauchverbindung zwischen einem Schlauch und einem röhrenförmigen Element, wobei das röhrenförmige Element eine erste Erweiterung und eine zweite Erweiterung umfasst. Ferner ist in einem Bereich zwischen der ersten Erweiterung und der zweiten Erweiterung ein Ring zum Halten des Schlauchs an dem röhrenförmigen Element vorgesehen.

Die Druckschrift US 1,303,098 A betrifft einen Schlauchreparator zur Reparatur von Gartenschläuchen mit einem Nippel, wobei der Nippel umlaufende Erweiterungen aufweist. Hierbei ist zum Befestigen eines Endes eines Gartenschlauchs an dem Nippel ein Klemmring vorgesehen.

Die Druckschrift US 3,275,349 A betrifft ein Schlauchverbindungsgerät mit einer Ausnehmung zum Befestigen eines Schlauchs an dem Schlauchverbindungsgerät mittels einer Klemme.

Die Druckschrift EP 0 499 819 A1 betrifft einen Nippel zur Verwendung in einer Schlauchverbindung mit zwei ringförmigen Wülsten. Hierbei ist ein Einlageelement zum Befestigen eines Schlauchs an dem Nippel vorgesehen.

Die Druckschrift US 1,786,489 A betrifft ein Anschlussstück mit zwei umlaufenden Rippen, wobei an dem Anschlussstück ein Schlauchende mittels einer Hülse befestigt werden kann. Die Druckschrift DE 29 45 560 A1 betrifft ein Anschlussstück mit einer Hülse zum Anschluss von Schläuchen, wobei die Hülse zwei Ringwülste aufweist. Hierbei ist eine Schlauchschelle zum Befestigen eines Schlauchs an der Hülse vorgesehen.

Die Druckschrift US 2010/0109319 A1 betrifft ein Anschlussstück mit einer Rohrverlängerung, wobei die Rohrverlängerung zwei konvexe Platten aufweist. Hierbei wird an der Rohrverlängerung ein Kunststoffrohr mittels eines Rings gehalten.

Die Druckschrift EP 0 312 756 A1 betrifft eine Schlauchbefestigung an Schlauchstutzen, die einen geschlossenen verengten Metallring aufweist.

Die Druckschrift DE 10 2008 049 095 A1 betrifft einen Fluidführungsverbinder mit einer schlauchförmigen Fluidführungseinrichtung zur Leitung eines druckgepulsten Fluids. Bei der schlauchförmigen Fluidführungseinrichtung kann es sich insbesondere um einen Ladeluftschlauch handeln, der mittels einer Schlauchschelle an einem Stutzen befestigt ist.

Es ist die der Erfindung zugrundeliegende Aufgabe, eine Ladeluftverbindungsanordnung mit einem Anschlussstutzen anzugeben, an dem ein aufgesteckter Schlauch befestigt werden kann, ohne dass dieser bei hohen Drücken abrutscht.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Die erfindungsgemäße Ladeluftverbindungsanordnung umfasst einen Anschlussstutzen zum Aufstecken eines Schlauches, mit einer ersten umlaufenden Wulst an einer Außenseite des Anschlussstutzens; einer zweiten umlaufenden Wulst an der Außenseite des Anschlussstutzens; und einem Auflagebereich zwischen der ersten umlaufenden Wulst und der zweiten umlaufenden Wulst zum Befestigen des Schlauches an dem Anschlussstutzen mittels einer Schelle. Durch die Wülste wird beispielsweise der technische Vorteil erreicht, dass gezielt Spannungsspitzen an den Kanten der Schelle erzeugt werden, die den Schlauch bei axialer Belastung halten. Der Anschlussstutzen kann in einer kürzeren Länge hergestellt werden, ohne dass Einbußen bei der Schlauchbefestigung entstehen. Dadurch ergibt sich zusätzlicher Bauraum für Leitungssysteme.

In einer vorteilhaften Ausführungsform des Anschlussstutzens umfasst der Auflagebereich eine Riffelung zum Vergrößern einer Kontaktfläche. Dadurch wird beispielsweise der technische Vorteil erreicht, dass der Halt des Schlauches an dem Anschlussstutzen verbessert wird.

In einer weiteren vorteilhaften Ausführungsform des Anschlussstutzens ist die Riffelung durch ein Sägezahnprofil oder ein Wellenprofil gebildet. Dadurch wird beispielsweise der technische Vorteil erreicht, dass ein Herabrutschen des Schlauchs in Längsrichtung durch das Profil verhindert wird.

In einer weiteren vorteilhaften Ausführungsform des Anschlussstutzens umfasst der Anschlussstutzen einen Anschlagabschnitt zum Begrenzen eines Aufsteckens des Schlauches. Dadurch wird beispielsweise der technische Vorteil erreicht, dass der Schlauch beim Aufstecken an einer vorgesehenen Position zum Liegen kommt.

In einer weiteren vorteilhaften Ausführungsform des Anschlussstutzens ist der Anschlagabschnitt gegenüber der zweiten Wulst beabstandet. Dadurch wird beispielsweise der technische Vorteil erreicht, dass zwischen der zweiten Wulst und dem Schlauchende ein Überstand gebildet wird, der ein Durchrutschen des Schlauches durch die Schelle verhindert.

In einer weiteren vorteilhaften Ausführungsform des Anschlussstutzens läuft der Anschlagabschnitt an dem Anschlussstutzen um. Dadurch wird beispielsweise der technische Vorteil erreicht, dass der Schlauch um den gesamten Umfang des Anschlussstutzens in der vorgesehenen Position aufgesteckt wird.

In einer weiteren vorteilhaften Ausführungsform des Anschlussstutzens weisen die erste umlaufende Wulst und die zweite umlaufende Wulst die gleiche Höhe auf. Dadurch wird beispielsweise der technische Vorteil erreicht, dass der Schlauch auf einfache Weise auf den Anschlussstutzen geschoben werden kann und in stabiler Weise durch die beiden Wülste stabilisiert wird.

In einer weiteren vorteilhaften Ausführungsform des Anschlussstutzens ist die erste umlaufende Wulst an einem offenen Ende des Anschlussstutzens angeordnet. Dadurch wird beispielsweise der technische Vorteil erreicht, dass ein erleichtertes Aufschieben des Schlauches auf die Wülste ermöglicht wird.

In einer weiteren vorteilhaften Ausführungsform des Anschlussstutzens verjüngt sich die erste umlaufende Wulst zu einem offenen Ende des Anschlussstutzens hin. Dadurch wird beispielsweise der technische Vorteil erreicht, dass der Schlauch aufgeschoben werden kann, ohne zu verkanten.

In einer weiteren vorteilhaften Ausführungsform des Anschlussstutzens weist die erste umlaufende Wulst oder die zweite umlaufende Wulst ein kreisbogenförmiges Querschnittsprofil auf. Dadurch wird beispielsweise der technische Vorteil erreicht, dass der Schlauch beim Aufschieben leichtgängig über die Wülste gleitet.

In einer weiteren vorteilhaften Ausführungsform des Anschlussstutzens bilden die erste umlaufende Wulst oder die zweite umlaufende Wulst ein kontinuierliches, stufenloses Querschnittsprofil. Dadurch wird beispielsweise ebenfalls der technische Vorteil erreicht, dass der Schlauch beim Aufschieben leichtgängig über die Wülste gleitet.

In einer weiteren vorteilhaften Ausführungsform des Anschlussstutzens umfasst der Anschlussstutzen einen Anschlag für die aufgesetzte Schelle. Dadurch wird beispielsweise der technische Vorteil erreicht, dass die Schelle in einfacher Weise an der vorgesehenen Position über dem Auflagebereich positioniert werden kann.

In einer weiteren vorteilhaften Ausführungsform des Anschlussstutzens ist der Anschlussstutzen aus Metall oder Kunststoff gebildet. Dadurch wird beispielsweise der technische Vorteil erreicht, dass der Anschlussstutzen auf einfache Weise hergestellt werden kann oder eine hohe Stabilität aufweist.

In einer vorteilhaften Ausführungsform des Anschlusssystems umfasst die Schelle eine Einohrklemme. Dadurch wird beispielsweise der technische Vorteil erreicht, dass der Schlauch auf schnelle Weise an dem Anschlussstutzen befestigt werden kann..

Ausführungsbeispiele der Erfindung sind in den Zeichnungen dargestellt und werden im Folgenden näher beschrieben.

Es zeigen:
- Fig. 1A: eine perspektivische Ansicht eines Anschlussstutzens;
- Fig. 1B: eine Seitenansicht des Anschlussstutzens;
- Fig. 2A: eine vergrößerte Seitenansicht des Anschlussstutzens;
- Fig. 2B: eine vergrößerte Querschnittsansicht des Anschlussstutzens;
- Fig. 3: eine Querschnittsansicht eines Anschlusssystems; und
- Fig. 4: eine Querschnittsansicht eines weiten Anschlusssystems mit einem Anschlag für eine Schelle.

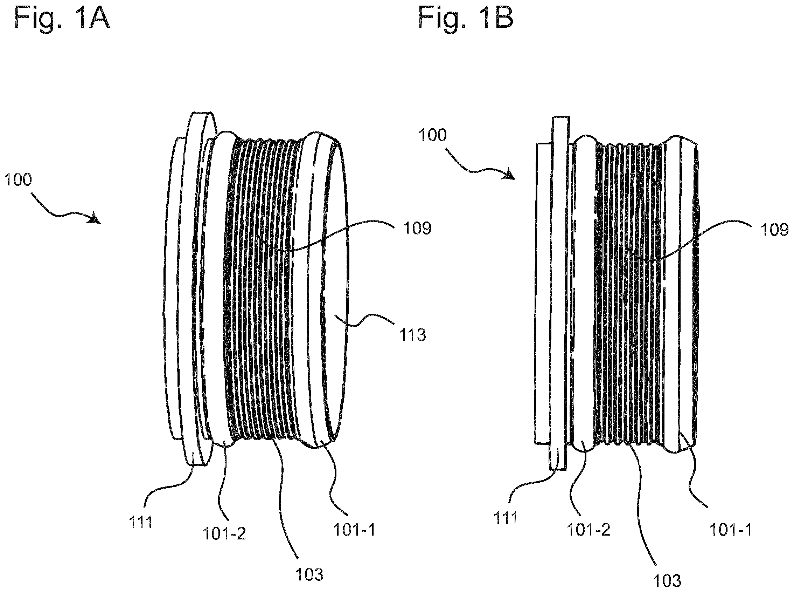

Fig. 1 zeigt eine perspektivische Ansicht eines Anschlussstutzens 100 und Fig. 1B eine Seitenansicht des Anschlussstutzens 100. Der Anschlussstutzen 100 ist rohrförmig ausgebildet und dient zum Aufstecken eines elastischen Schlauches für eine Fluidverbindung, beispielsweise eine Ladeluftverbindung in einem Kraftfahrzeug. Der Anschlussstutzen 100 verfügt über eine erste umlaufende Wulst 101-1 und eine zweite umlaufende Wulst 101-2 in einem definierten Abstand zur ersten umlaufende Wulst 101-1. Zwischen der ersten umlaufenden Wulst 101-1 und der zweiten umlaufende Wulst 101-2 ist der zylinderförmige Auflagebereich 103 zum Befestigen des Schlauches an dem Anschlussstutzen 100 mittels einer Schelle gebildet. Der Durchmesser des Anschlussstutzens 100 beträgt beispielsweise 40mm bis 70mm. In Ladeluftsystemen beträgt der Durchmesser beispielsweise 58mm. Diese sind insbesondere bei größeren Durchmessern effektiv. Gemäß einer Ausführungsform kann der Durchmesser des Anschlussstutzens 100 40mm bis 80mm betragen.

Die erste umlaufende Wulst 101-1 und die zweite umlaufende Wulst 101-2 weisen die gleiche Höhe auf, die beispielsweise 1,5 mm beträgt. Die erste umlaufende Wulst 101-1 ist an einem offenen Ende 113 des Anschlussstutzens 100 angeordnet, so dass der Schlauch beim Aufschieben unmittelbar über die Wulst 101-1 gleiten kann. Die beiden Wülste 101-1 und 101-2 weisen ein kreisbogenförmiges Querschnittsprofil auf, so dass ein kontinuierliches, stufenloses und glattes Querschnittsprofil entsteht, über das der Schlauch beim Aufschieben leicht gleiten kann. Gemäß einer Ausführungsform können die erste umlaufende Wulst 101-1 und die zweite umlaufende Wulst 101-2 eine Differenz, insbesondere eine leichte Differenz, in der Höhe aufweisen. Beispielsweise beträgt die Differenz 1%, 2%, 3%, 4%, 5%, 6%, 7%, 8%, 9% oder 10%.

Der Auflagebereich 103 weist eine Riffelung 109 zum Vergrößern einer Kontaktfläche zwischen dem aufgeschobenen Schlauch und dem Anschlussstutzen 100 auf. Die Riffelung ist beispielsweise durch ein Rillenprofil, ein Sägezahnprofil oder ein Wellenprofil gebildet. Die Riffelung 109 dient der Vergrößerung der Oberfläche und der Erzeugung von zusätzlichen Formkräften. Die Vertiefungen der Riffelung weisen beispielsweise eine Tiefe von 0,2 mm bis 0,6 mm auf.

Der Anschlussstutzen 100 dient beispielsweise für einen verbesserten Festsitz von LadeluftSchlauchanbindungen in Verbindung mit Einohrklemmen. Durch den Anschlussstutzen 100 wird ein verbesserter Festsitz von Ladeluftschlauchanbindungen oder ein Festsitz von Ethylen-Acrylat-Kautschuk-Schläuchen (AEM-Schläuchen) erreicht. Auf dem Anschlussstutzen 100 geschieht kein Rutschen der Anbindung, so dass der Anschlussstutzen 100 für alle geeigneten Ladeluftanbindungen verwendet werden kann.

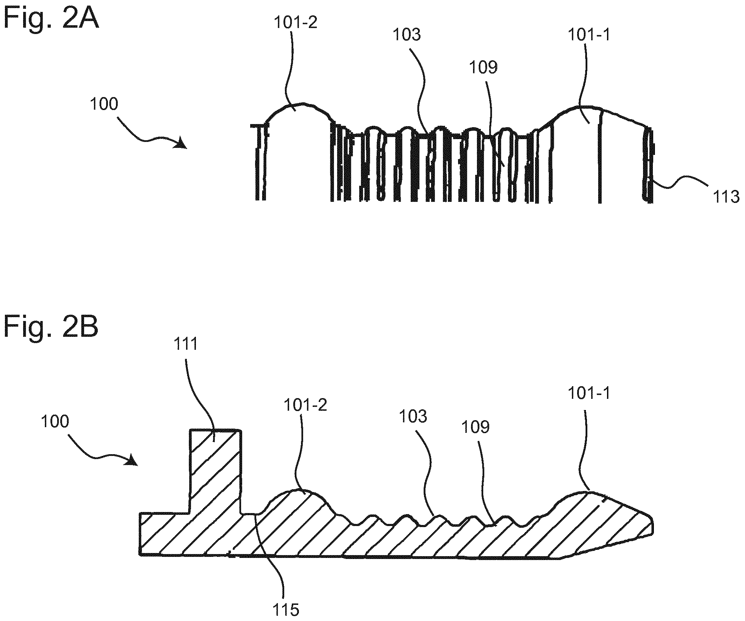

Fig. 2A zeigt eine vergrößerte Seitenansicht des Anschlussstutzens 100 und Fig. 2B eine vergrößerte Querschnittsansicht des Anschlussstutzens 100. Der Anschlussstutzen 100 umfasst einen außen umlaufenden Anschlagsabschnitt 111, der die Bewegung beim Aufschieben des Schlauches begrenzt. Der Anschlagabschnitt 111 kann stufenförmig ausgebildet sein, so dass sowohl ein Anschlag für den Schlauch als auch ein Anschlag für die aufgeschobene Schelle entsteht. Dadurch kann die Schelle in exakt der vorgesehenen Position über dem Auflagebereich 103 positioniert werden.

Der Anschlagsabschnitt 111 ist einstückig an dem Anschlussstutzen 100 gebildet und weist eine im Querschnitt rechteckige Form auf. Der Anschlussstutzen 100 umfasst einen Beabstandungsabschnitt 115, so dass beim Aufschieben des Schlauches eine ausreichende Überlänge zwischen der zweiten Wulst 101-2 und dem Anschlagsabschnitt 111 entsteht. Zu seinem offenen Ende 113 hin verjüngt sich der Anschlussstutzen 100, so dass im Inneren bessere Strömungseigenschaften herrschen und der Schlauch leichter auf den Anschlussstutzen 100 aufgeschoben werden kann.

Der Anschlussstutzen 100 kann aus Metall, wie beispielsweise aus Edelstahl oder Aluminium, oder aus einem geeigneten Kunststoff hergestellt sein, wie beispielsweise Polyamid PA, Polyphenylensulfid PPS oder Polybutylenterephthalat PBT mit und ohne Metallhülse.

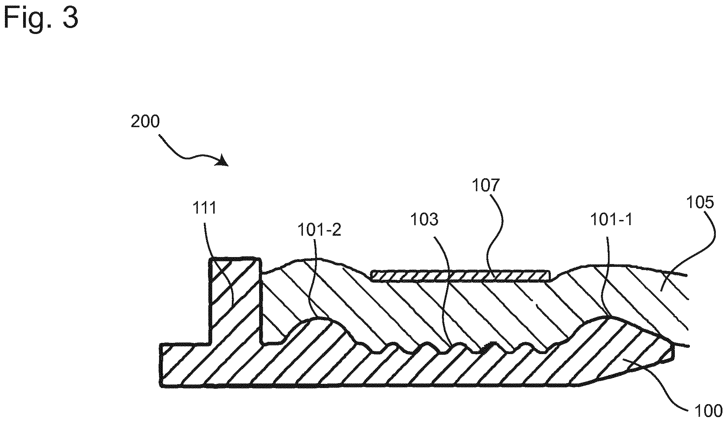

Fig. 3 zeigt eine Querschnittsansicht eines Anschlusssystems 200. Der Schlauch 105 ist auf den Anschlussstutzen 100 geschoben und anschließend mit einer Schelle 107, wie beispielsweise einer Einohrklemme, gegen Abrutschen gesichert. Die Schelle 107 ist dabei derart positioniert, dass diese zwischen der ersten Wulst 101-1 und der zweiten Wulst 101-2 liegt. Die zweite Wulst 101-2 bewirkt, dass Spannungsspitzen an der hinteren Kante der Schelle 107 erzeugt werden, die den Schlauch 105 bei axialer Belastung an dem Anschlussstutzen 100 halten. Der Schlauch 105 weist beispielsweise eine elastische Wandung in einer Stärke von 5 mm auf, die im Auflagebereich 103 durch die Schelle 107 komprimiert wird. Jenseits der Schelle 107 wird der Schlauch 105 durch die erste und die zweite Wulst 101-1 und 101-2 eingeklemmt.

Der Anschlussstutzen 100 erlaubt den Einsatz von Ethylen-Acrylat-Kautschuk-Schläuchen statt Silikonschläuchen in Ladeluftverbindungen in einem Kraftfahrzeug auf der kalten Seite bei hohen Ladeluftdrücken, die beispielsweise einen Überdruck von 2,9 bar übersteigen. Eine schnelle und zuverlässige Schlauchbefestigung lässt sich durch den optimierten Anschlussstutzen in Kombination mit Einohrklemmen erreichen.

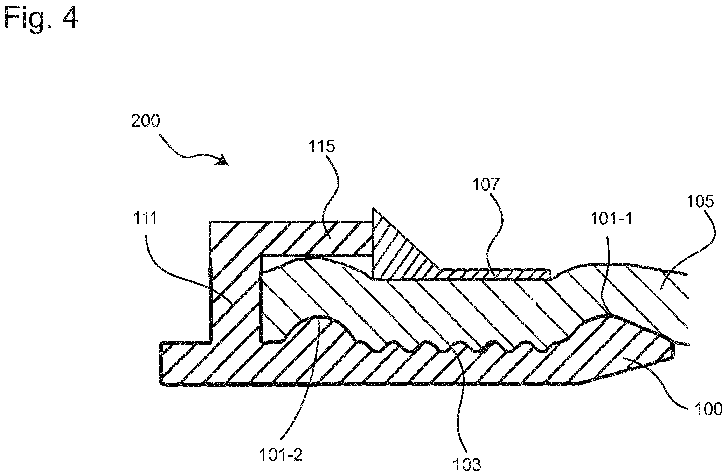

Fig. 4 zeigt eine Querschnittsansicht eines weiten Anschlusssystems 200 mit einem herausstehenden Anschlag 115 für die Schelle 107. Der umlaufende Anschlag 115 für die Schelle 107 ist zusammen mit dem Anschlagsabschnitt 111 für den Schlauch 105 gebildet. Der Anschlag 115 für die Schelle 107 bewirkt, dass die Schelle 107 an der vorgesehenen Position oberhalb des Auflagebereichs 103 positioniert werden kann. Zu diesem Zweck stößt die Schelle 107 an dem Anschlag 115 an. Die Schelle 107 kann derart ausgebildet sein, dass diese einen Anschlagsabschnitt umfasst.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Anschlussstutzen
- 101-1: Wulst
- 101-2: Wulst
- 103: Auflagebereich
- 105: Schlauch
- 107: Schelle
- 109: Riffelung
- 111: Anschlagsabschnitt
- 113: offenes Ende
- 115: Anschlag
- 200: Anschlusssystem

## Patentansprüche

1. Ladeluftverbindungsanordnung für ein Kraftfahrzeug, mit:
einem Ethylen-Acrylat-Kautschuk-Schlauch (105);
einer Schelle (107); und
einem Anschlussstutzen (100) zum Aufstecken des Ethylen-Acrylat-Kautschuk-Schlauches (105), mit:
einer ersten umlaufenden Wulst (101-1) an einer Außenseite des Anschlussstutzens (100);
einer zweiten umlaufenden Wulst (101-2) an der Außenseite des Anschlussstutzens (100); und
einem Auflagebereich (103) zwischen der ersten umlaufenden Wulst (101-1) und der zweiten umlaufenden Wulst (101-2) zum Befestigen des Ethylen-Acrylat-Kautschuk-Schlauches (105) an dem Anschlussstutzen (100) mittels der Schelle (107).

2. Ladeluftverbindungsanordnung nach Anspruch 1, wobei der Auflagebereich (103) eine Riffelung (109) zum Vergrößern einer Kontaktfläche umfasst.

3. Ladeluftverbindungsanordnung nach Anspruch 2, wobei die Riffelung (109) durch ein Sägezahnprofil oder ein Wellenprofil gebildet ist.

4. Ladeluftverbindungsanordnung nach einem der vorangehenden Ansprüche, wobei der Anschlussstutzen (100) einen Anschlagabschnitt (111) zum Begrenzen eines Aufsteckens des Schlauches (105) umfasst.

5. Ladeluftverbindungsanordnung nach Anspruch 4, wobei der Anschlagabschnitt (111) gegenüber der zweiten Wulst (101-2) beabstandet ist.

6. Ladeluftverbindungsanordnung nach einem der Ansprüche 4 oder 5, wobei der Anschlagabschnitt (111) an dem Anschlussstutzen (100) umläuft.

7. Ladeluftverbindungsanordnung nach einem der vorangehenden Ansprüche, wobei die erste umlaufende Wulst (101-1) und die zweite umlaufende Wulst (101-2) die gleiche Höhe aufweisen.

8. Ladeluftverbindungsanordnung nach einem der vorangehenden Ansprüche, wobei die erste umlaufende Wulst (101-1) an einem offenen Ende (113) des Anschlussstutzens (100) angeordnet ist.

9. Ladeluftverbindungsanordnung nach Anspruch 8, wobei sich die erste umlaufende Wulst (101-1) zu einem offenen Ende (113) des Anschlussstutzens (100) hin verjüngt.

10. Ladeluftverbindungsanordnung nach einem der vorangehenden Ansprüche, wobei die erste umlaufende Wulst (101-1) oder die zweite umlaufende Wulst (101-1) ein kreisbogenförmiges Querschnittsprofil aufweisen.

11. Ladeluftverbindungsanordnung nach einem der vorangehenden Ansprüche, wobei die erste umlaufende Wulst (101-1) oder die zweite umlaufende Wulst (101-2) ein kontinuierliches, stufenloses Querschnittsprofil bilden.

12. Ladeluftverbindungsanordnung nach einem der vorangehenden Ansprüche, wobei der Anschlussstutzen (100) einen Anschlag (115) für die aufgesetzte Schelle (107) umfasst.

13. Ladeluftverbindungsanordnung nach einem der vorangehenden Ansprüche, wobei der Anschlussstutzen (100) aus Metall oder Kunststoff gebildet ist.

14. Ladeluftverbindungsanordnung nach einem der vorangehenden Ansprüche, wobei die Schelle (107) eine Einohrklemme umfasst.

## Claims

1. Assembly for a charged air connection for a motor vehicle, comprising:
an ethylene-acrylate rubber hose (105);
a clamp (107); and
a connecting piece (100) for plugging the ethylene-acrylate rubber hose (105), comprising:
a first circumferential ridge (101-1) on an outer side of the connecting piece (100);
a second circumferential ridge (101-2) on the outer side of the connecting piece (100); and
a supporting region (103) between the first circumferential ridge (101-1) and the second circumferential ridge (101-2) for fastening the ethylene-acrylate rubber hose (105) to the connecting piece (100) by means of the clamp (107).

2. Assembly for a charged air connection according to claim 1, wherein the supporting region (103) comprises a corrugation (109) for increasing a contact surface.

3. Assembly for a charged air connection according to claim 2, wherein the corrugation (109) is formed by a saw-tooth profile or a wave profile.

4. Assembly for a charged air connection according to any one of the preceding claims, wherein the connecting piece (100) comprises a stopper portion (111) for limiting a plugging of the hose (105).

5. Assembly for a charged air connection according to claim 4, wherein the stopper portion (111) is spaced from the second circumferential ridge (101-2).

6. Assembly for a charged air connection according to claim 4 or 5, wherein the stopper portion (111) extends around the connecting piece (100).

7. Assembly for a charged air connection according to any one of the preceding claims, wherein the first circumferential ridge (101-1) and the second circumferential ridge (101-2) have the same height.

8. Assembly for a charged air connection according to any one of the preceding claims, wherein the first circumferential ridge (101-1) is arranged onto an open end (113) of the connecting piece (100).

9. Assembly for a charged air connection according to claim 8, wherein the first circumferential ridge (101-1) is tapered towards an open end (113) of the connecting piece (100).

10. Assembly for a charged air connection according to any one of the preceding claims, wherein the first circumferential ridge (101-1) or the second circumferential ridge (101-2) comprises a cross-sectional profile in the form of a circular arc.

11. Assembly for a charged air connection according to any one of the preceding claims, wherein the first circumferential ridge (101-1) or the second circumferential ridge (101-2) forms a continuous, smooth cross-sectional profile.

12. Assembly for a charged air connection according to any one of the preceding claims, wherein the connecting piece (100) comprises an abutment (115) for the placed clamp (107).

13. Assembly for a charged air connection according to any one of the preceding claims, wherein the connecting piece (100) is made of metal or plastic.

14. Assembly for a charged air connection according to any one of the preceding claims, wherein the clamp (107) comprises a hose clamp.

## Revendications

1. Assemblage de raccord d'air chargé pour un véhicule automobile, comportant:
un tuyau en caoutchouc d'éthylène d'acrylate (105);
un collier (107); et
un raccord (100) pour enficher le tuyau en caoutchouc d'éthylène d'acrylate (105), comportant:
un premier bourrelet circonférentiel (101-1) autour d'une partie extérieure du raccord (100);
un deuxième bourrelet circonférentiel (101-2) autour de la partie extérieure du raccord (100);
une zone d'appui (103) entre le premier bourrelet circonférentiel (101-1) et le deuxième bourrelet circonférentiel (101-2) pour fixer le tuyau en caoutchouc d'éthylène d'acrylate (105) au raccord (100) par le biais du collier (107).

2. Assemblage de raccord d'air chargé selon la revendication 1, dans lequel la zone d'appui (103) comporte une cannelure (109) pour augmenter une surface de contact.

3. Assemblage de raccord d'air chargé selon la revendication 2, dans lequel la cannelure (109) est formée à partir d'un profil en dents de scie ou d'un profil ondulé.

4. Assemblage de raccord d'air chargé selon l'une des revendications précédentes, dans lequel le raccord (100) comporte une portion de butée (111) pour limiter une insertion du tuyau (105).

5. Assemblage de raccord d'air chargé selon la revendication 4, dans lequel la portion de butée (111) est espacée par rapport au deuxième bourrelet (101-2).

6. Assemblage de raccord d'air chargé selon la revendication 4 ou 5, dans lequel la portion de butée (111) tourne autour du raccord (100).

7. Assemblage de raccord d'air chargé selon l'une des revendications précédentes, dans lequel le premier bourrelet circonférentiel (101-1) et le deuxième bourrelet circonférentiel (101-2) ont la même hauteur.

8. Assemblage de raccord d'air chargé selon l'une des revendications précédentes, dans lequel le premier bourrelet circonférentiel (101-1) est placé à une extrémité ouverte (113) du raccord (100).

9. Assemblage de raccord d'air chargé selon la revendication 8, dans lequel le premier bourrelet circonférentiel (101-1) se rétrécit en direction d'une extrémité ouverte (113) du raccord (100).

10. Assemblage de raccord d'air chargé selon l'une des revendications précédentes, dans lequel le premier bourrelet circonférentiel (101-1) ou le deuxième bourrelet circonférentiel (101-2) a un profil transversal en forme d'arc de cercle.

11. Assemblage de raccord d'air chargé selon l'une des revendications précédentes, dans lequel le premier bourrelet circonférentiel (101-1) ou le deuxième bourrelet circonférentiel (101-2) forme un profil transversal continu, sans discontinuité.

12. Assemblage de raccord d'air chargé selon l'une des revendications précédentes, dans lequel le raccord (100) comporte une butée (115) pour le collier (107) placé.

13. Assemblage de raccord d'air chargé selon l'une des revendications précédentes, dans lequel le raccord (100) est réalisé en métal ou en plastique.

14. Assemblage de raccord d'air chargé selon l'une des revendications précédentes, dans lequel le collier (107) comporte une borne à oreilles.
